# EUROPEAN PATENT APPLICATION

(11) **EP 4 393 807 A1**
(43) Date of publication of application: **03.07.2024**
(21) Application number: 22921595.9
(22) Date of filing: 09.11.2022
(51) Int. Cl.: B62M 11/16, B62M 7/12

(54) **HUB ASSEMBLY AND BICYCLE**

(30) Priority: 19.01.2022 CN 202210061317
(71) Applicant: Guangdong Lofandi Intelligent Technology Co., Ltd, Foshan, Guangdong 528225 (CN)
(72) Inventor: LI, Jichu, Foshan, Guangdong 528225 (CN); LIN, Jiehuang, Foshan, Guangdong 528225 (CN)
(74) Representative: Marks & Clerk LLP
(86) International application number: PCT/CN2022/130803
(87) International publication number: WO 2023/138171

(57) **Abstract**

A hub assembly, comprising a hub axle (100); a hub (200), which is rotatably sleeved on the hub axle (100); a planetary gear assembly (300), which is arranged on the hub axle (100) and in the hub (200) and is used for transmitting a driving force to the hub (200); a power input member (400), which is rotatably sleeved on the hub axle (100) and is used for providing a driving force for the planetary gear assembly (300); a control assembly (500), which acts on the planetary gear unit (300) and is used for switching a transmission path for the driving force; an electric transmission assembly (600), which acts on the control assembly (500) so as to switch a transmission path for the driving force; and a driving electric motor (10), which is arranged in the hub (200) and is used for providing a driving force for the hub (200).

## Description

The present application claims priority to Chinese Patent Application No. 202210061317.0, titled "HUB ASSEMBLY AND BICYCLE", filed on January 19, 2022 with the China National Intellectual Property Administration, which is incorporated herein by reference in its entirety.

### FIELD

The present application relates to the technical field of bicycle speed change, and in particular to a hub assembly and a bicycle with the hub assembly.

### BACKGROUND

A transmission is arranged in a hub assembly of a bicycle, which brings great convenience to riders. With the development of the bicycle transmission, an internal transmission of bicycle becomes more and more attractive to riders due to many advantages such as high efficiency, great load capacity, dust prevention and water resistance.

The internal transmission of the bicycle uses a planetary gear assembly as a main transmission body, and is enclosed and assembled in a hub of a rear wheel axle, which can overcome defects of an external transmission and provide better transmission performance.

However, in the conventional technology, the speed of a bicycle is generally changed only through the transmission, and a conventional transmission controls speed changes by driving a control member in an internal transmission through a thumb shifter mounted on a handlebar, the operation is complicated.

### SUMMARY

In order to solve the above technical problems, a hub assembly and a bicycle are provided according to the present application. Compared with the conventional technology, accurate and simple shifting of the bicycle can be performed, the riding is labor-saving, and the riding experience of the user is improved.

In order to solve the problems in the conventional technology, in a first aspect, a hub assembly is provided according to the present application, which includes:
a hub shaft;
a hub rotatably sleeved on the hub shaft;
a planetary gear assembly arranged on the hub shaft and in the hub, where the planetary gear assembly is configured to transmit a driving force to the hub;
a power input member rotatably sleeved on the hub shaft and configured to provide the driving force to the planetary gear assembly;
a control assembly configured to act on the planetary gear assembly, to switch a transmission path of the driving force;
an electric transmission assembly configured to act on the control assembly, to switch the transmission path of the driving force; and
a driving motor arranged in the hub and configured to provide the driving force to the hub.

Preferably, the control assembly includes:
a seat mounted on the hub shaft;
a switching member arranged at the seat; and
a control sleeve configured to act on the switching member, to switch between an engaged state and a separated state of the switching member and a center wheel of the planetary gear assembly.

Preferably, the electric shifting assembly includes:
a control motor;
a control ring connected to the control sleeve, where the control ring has a pushing portion; and
a drive member driven by the control motor, where the drive member is configured to act on the pushing portion, to rotate the control ring around the hub shaft.

Preferably, the drive member includes:
a drive ring;
a toothed portion provided on an outer peripheral surface of the drive ring;
a worm gear structure driven by the control motor and meshing with the toothed portion; and
a pushing member provided on the drive ring and configured to act on the pushing portion.

Preferably, the drive ring is provided with a mounting hole, a spring is provided in the mounting hole, and the pushing member is connected to the spring.

Preferably, the drive ring is nested in the annular cavity, and the motor and the worm gear structure are arranged in the annular cavity.

Preferably, the hub assembly further includes:
a Hall plate mounted on the mounting seat; and
a positioning magnet provided on the drive ring.

Preferably, the power input member includes a flywheel seat mounted on the hub shaft through a first bearing and a transmission gear mounted on the flywheel seat; and
the flywheel seat is provided with a mounting cavity, and the hub is mounted in the mounting cavity through a second bearing.

In a second aspect, a bicycle is further provided according to the present application, which includes the hub assembly according to any one of above solutions.

Compared with the conventional technology, in the hub assembly provided according to the present application, the electric shifting assembly and the driving motor is arranged in the hub, so that the electric shifting assembly can timely act on the control assembly to switch the transmission path of the driving force, and gear switch can be implemented through simple operations. In addition, the driving motor can provide the driving force to the hub to assist the rotation of the hub. Therefore, not only accurate and simple shifting of the bicycle can be achieved, but also the riding is labor-saving, and thereby the riding experience of the user is improved.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic view showing the structure of a hub assembly according to an embodiment of the present application;
FIG. 2 is an enlarged schematic view of part A in Figure 1;
FIG. 3 is a schematic view showing the structure of a hub assembly according to an embodiment of the present application;
FIG. 4 is a schematic perspective view showing the structure of a hub assembly according to an embodiment of the present application;
FIG. 5 is a schematic view showing the structure of a worm gear and a drive ring according to an embodiment of the present application;
FIG. 6 is a schematic view showing the structure of a pushing member according to an embodiment of the present application;
FIG. 7 is a schematic view showing the structure of the worm gear and the drive ring according to the embodiment of the present application from another viewing angle;
FIG. 8 is a schematic view showing the structure of a mounting seat according to an embodiment of the present application;
FIG. 9 is a schematic view showing the structure of a drive ring according to an embodiment of the present application;
FIG. 10 is a schematic view showing the structure of a control ring according to an embodiment of the present application; and
FIG. 11 is a schematic view showing the structure of a seat according to an embodiment of the present application.

### Reference numerals:

| | | | |
|---|---|---|---|
| 10 | driving motor, | 100 | hub shaft, |
| 200 | hub, | 300 | planetary gear assembly |
| 310 | center wheel, | 320 | planetary gear, |
| 330 | inner gear ring, | 340 | planetary carrier, |
| 400 | power input member, | 410 | flywheel seat, |
| 411 | first bearing, | 412 | mounting cavity, |
| 413 | second bearing, | 420 | flywheel, |
| 430 | one-way clutch or pawl mechanism, | 500 | control assembly, |
| 510 | seat, | 520 | switching member, |
| 530 | control sleeve, | 600 | electric shifting assembly, |
| 610 | control motor, | 620 | control ring, |
| 621 | pushing portion, | 630 | drive member, |
| 631 | drive ring, | 632 | toothed portion, |
| 633 | worm gear structure, | 634 | pushing member, |
| 635 | mounting hole, | 636 | spring, |
| 640 | mounting seat, | 641 | annular cavity, |
| 642 | Hall plate, | 643 | positioning magnet. |

### DETAILED DESCRIPTION OF EMBODIMENTS

In order to enable those skilled in the art to better understand the technical solutions in the present application, the technical solutions according to the embodiments of the present application are clearly and completely described below. Apparently, the described embodiments are only part of the embodiments of the present application, rather than all of the embodiments. Any other embodiment obtained by those skilled in the art based on the embodiments in the present application without creative efforts shall fall within the protection scope of the present application.

It should be noted that, when an element is referred to as being "fixed" or "arranged" on another element, it may be directly or indirectly arranged on the another element, and when an element is referred to as being "connected to" another element, it may be directly connected to or indirectly connected to the another element.

It should be understood that, orientations or positional relationships indicated by terms, such as "length", "width", "up", "down", "front", "back", "left", "right", "vertical", "horizontal", "top", "bottom", "inner", "outer", are based on the orientations or position relationships shown in the drawings, and are only for the convenience of describing the present application and simplifying the description, rather than indicating or implying that devices or elements referred to must have specific orientations, or must be constructed and operated in specific orientations, and thus should not be understood as limitations to the present application.

In addition, terms "first" and "second" are only used for description, and should not be understood as indicating or implying relative importance or implicitly indicating the number of indicated technical features. Therefore, features defined with "first" and "second" can explicitly or implicitly include one or more of these features. In the description of the present application, "multiple" or "several" means two or more, unless explicitly and specifically defined otherwise.

It should be noted that, structures, proportions, sizes, and the like shown in the drawings of the description are only used to coordinate with the content disclosed in the description for understanding and reading of those familiar with this technology, and are not intended to limit the limiting conditions for the implementation of the present application, and therefore, they have no technical substantive significance. Any structural modifications, changes in the proportion relationship, or adjustments in size should still fall within the scope covered by the technical content disclosed in the present application, without affecting effects and goals that can be achieved by the present application.

The embodiments are written in a progressive manner.

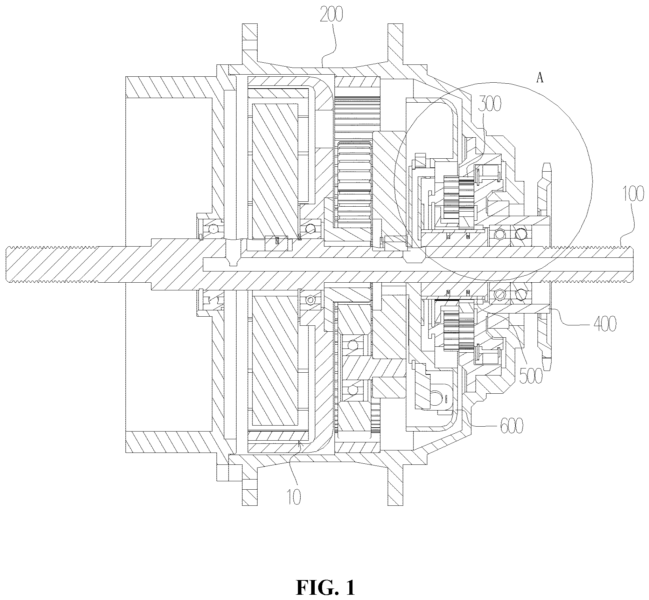

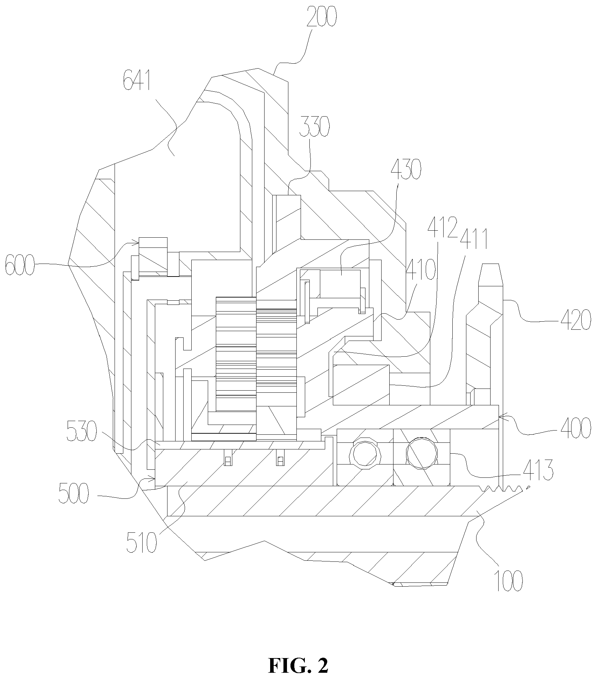

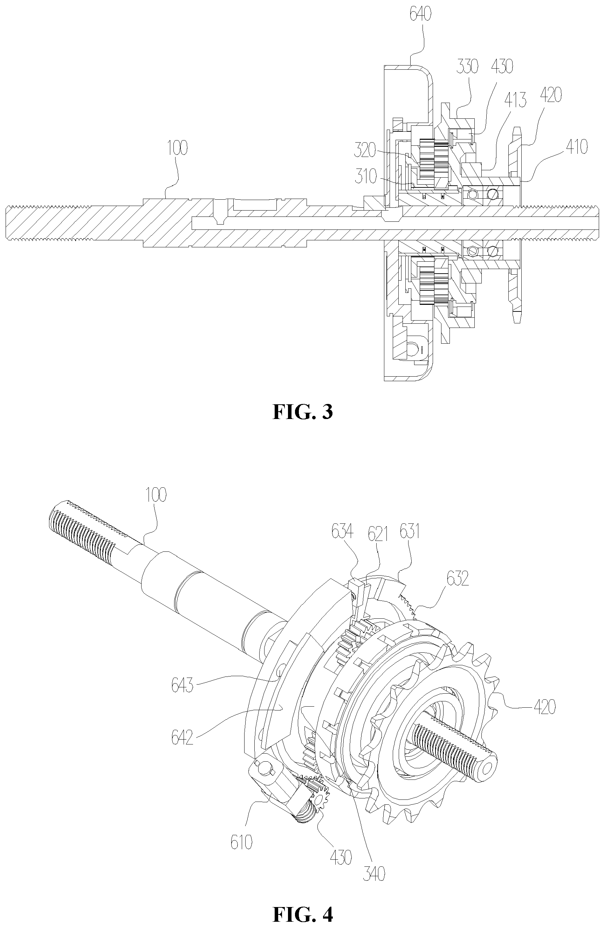

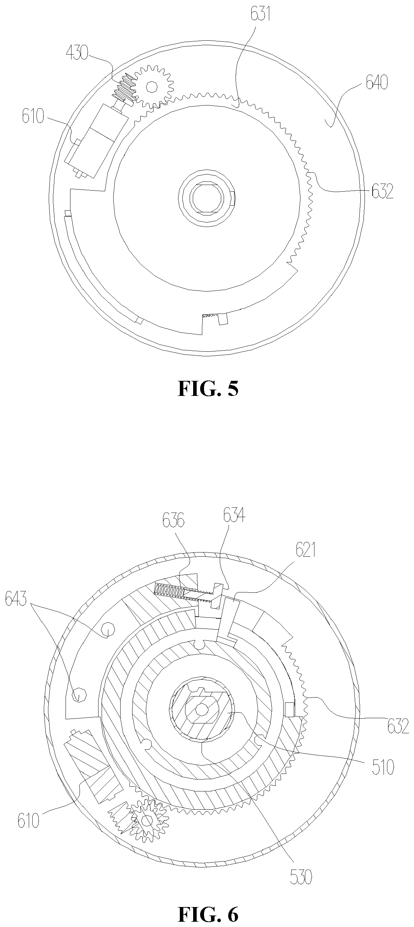

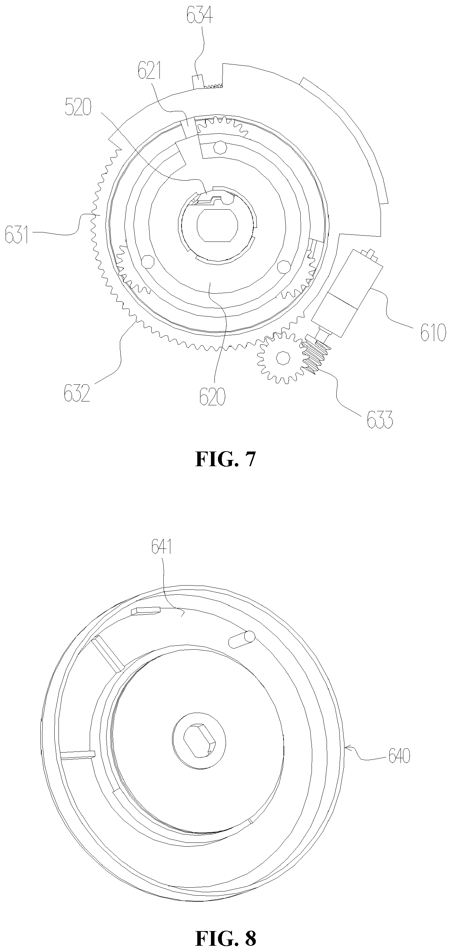

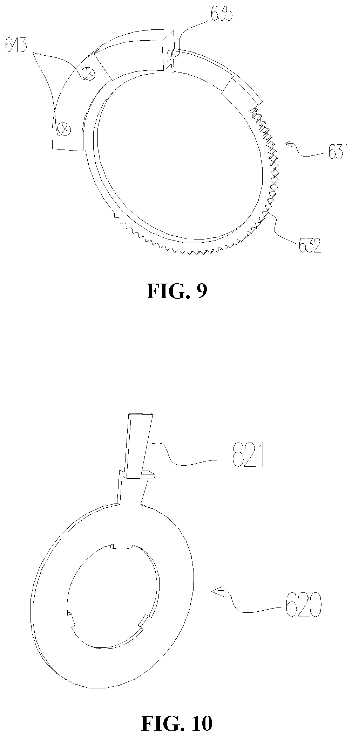

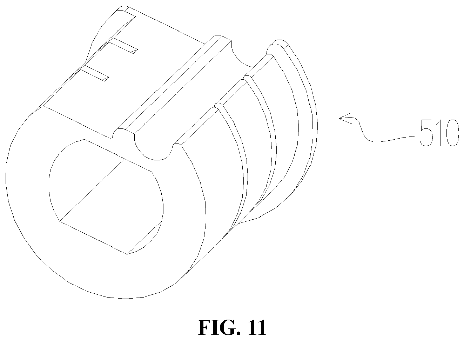

As shown in FIGS. 1 to 11, a hub assembly is provided according to an embodiment of the present application. The hub assembly includes: a hub shaft 100; a hub 200 rotatably sleeved on the hub shaft 100; a planetary gear assembly 300 arranged on the hub shaft 100 and in the hub 200, where the planetary gear assembly 300 is configured to transmit a driving force to the hub 200; a power input member 400 rotatably sleeved on the hub shaft 100 and configured to provide the driving force to the planetary gear assembly 300; a control assembly 500 acting on the planetary gear assembly 300 and configured to switch a transmission path of the driving force; an electric shifting assembly 600 acting on the control assembly 500 to switch the transmission path of the driving force; and a driving motor 10 arranged in the hub 200 and configured to provide the driving force to the hub 200.

Compared with the conventional technology, the hub assembly according to the present application is provided with the electric shifting assembly 600 and the driving motor 10, where the electric shifting assembly 600 can timely act on the control assembly to switch the transmission path of the driving force, so that gear switch can be implemented through simple operations. The driving motor 10 can provide the driving force to the hub 200 to assist the rotation of the hub 200. Therefore, not only accurate and simple shifting of the bicycle can be achieved, but also the riding of a rider is labor-saving, and thereby the riding experience of the user is improved.

As a preferred embodiment, a torque sensor and/or a speed sensor and/or a gyroscope may be provided. The electric shifting assembly 600 or the driving motor 10 can realize automatic shifting of a transmission or automatic assistance by the driving motor 10 based on a signal monitored by the torque sensor and/or the speed sensor and/or the gyroscope. Through this structure, the rider does not need to perform a shifting operation, which further improves the riding experience of the rider.

In the embodiment of the present application, the hub shaft 100 is fixedly mounted on a frame of the bicycle.

In the embodiment of the present application, the hub 200 is rotatable relative to the hub shaft 100, and may be provided with spokes. The hub 200 rotates and a bicycle wheel rotates, and the rotation speed of the hub 200 is consistent with the rotation speed of the bicycle wheel.

In the embodiment, the planetary gear assembly 300 includes a center wheel 310 that is rotatable around the hub shaft 100, a planetary gear 320 that meshes with the center wheel 310, an inner gear ring 330 that meshes with the planetary gear 320, and a planetary carrier 340 for holding the planetary gear 320. The inner gear ring 330 is fixed to the hub 200. The number of the planetary gear assemblies 300 is two or more, so as to transmit the driving force through different paths.

In the embodiment, the power input member 400 includes a flywheel seat 410 and a flywheel 420. The flywheel 420 is fixedly mounted on the flywheel seat 410. The flywheel seat 410 is mounted on the hub shaft 100 through a first bearing 411. The flywheel 420 rotates under force to drive the flywheel seat 410 to rotate. A one-way clutch or a pawl mechanism 430 is provided between the flywheel seat 410 and the inner gear ring 330, so that when the rotation speed of the flywheel seat 410 is greater than the rotation speed of the inner gear ring 330, the driving force is transmitted to the inner gear ring 330 through the flywheel seat 410 via the one-way clutch or the pawl mechanism 430, and when the rotation speed of the flywheel seat 410 is smaller than the rotation speed of the inner gear ring 330, the driving force is no longer directly transmitted to the inner gear ring 330 through the flywheel seat 410, instead, it is transmitted to the inner gear ring 330 after shifting by the planetary gear assembly 300. The flywheel seat 410 is fixedly connected to the planetary carrier 340, and the planetary carrier 340 is driven to rotate as the flywheel seat 410 rotates.

In the embodiment of the present application, the flywheel seat 410 is provided with a mounting cavity 412, and an end of the hub 200 close to the flywheel 420 is placed in the mounting cavity 412 and mounted in the mounting cavity 412 through a second bearing 413. With this arrangement, the matching parts of the inner gear ring 330, the one-way clutch or the pawl mechanism 430, the flywheel seat 410, and the second bearing 413 are basically located on one longitudinal section, greatly reducing the width of the internal transmission, so that the structure of the internal transmission is more compact, and thereby reducing the distance between fork ends of the bicycle frame.

In the embodiment of the present application, the control assembly 500 includes a seat 510 mounted on the hub shaft 100, a switching member 520 arranged on the seat 510, a control sleeve 530 configured to act on the switching member 520 to switch between an engaged state and a separated state of the switching member 520 and the center wheel 310 of the planetary gear assembly 300.

The seat 510 is provided with a first groove and a second groove. One end of the switching member 520 is placed in the first groove. Under the action of a torsion spring, the other end of the switching member 520 is fitted with an inner peripheral surface of the center wheel 310 in a clamping manner, to lock the center wheel 310, so that the center wheel 310 does not rotate. When the control sleeve 530 rotates, it acts on the switching member 520 to press the other end of the switching member 520 into the second groove, at this time, the switching member 520 and the center wheel 310 are in the separated state, and the center wheel 310 is able to rotate. The number of the switching members 520 is more than one, which matches the number of the center wheels. The rotation of the control sleeve 530 allows the switching members 520 to switch between the engaged state and the separated state.

The seat 510 may be fixed to the hub shaft 100 by means of a key or a flat portion, so that the seat 510 does not rotate relative to the hub shaft 100.

In the embodiment of the present application, the electric shifting assembly 600 includes a control motor 610, a control ring 620 having a pushing portion 621 and connected to the control sleeve 530, a drive member 630 driven by the control motor 610 and configured to act on the pushing portion 621 to allow the control ring 620 to rotate around the hub shaft 100.

When the signal detected by the torque sensor and/or the speed sensor and/or the gyroscope is transmitted to the control motor 610, the control motor 610 operates and acts on the drive member 630. The drive member 630 acts on the pushing portion 621 to allow the control ring 620 to rotate. Due to the connection between the control ring 620 and the control sleeve 530, the control sleeve 530 rotates to switch the state of the switching member 520, so as to change the transmission path of the driving force.

Preferably, the drive member 630 includes a drive ring 631, a toothed portion 632 provided on the outer peripheral surface of the drive ring 631, a worm gear structure 633 driven by the control motor 610 and meshing with the toothed portion 632, and a pushing member 634 arranged on the drive ring 631 and acting on the pushing portion 621.

The control motor 610 drives the worm gear structure 633 to act on the toothed portion 632. Since the toothed portion 632 meshes with the worm gear structure 633, the drive ring 631 rotates to allow the pushing member 634 to push the pushing portion 621, thereby driving the control ring 620 to rotate and realizing the rotation of the control sleeve 530.

Preferably, the drive ring 631 is provided with a mounting hole 635, a spring 636 is provided inside the mounting hole 635, and the pushing member 634 is connected to the spring 636. The pushing member 634 has one end being in contact with the spring 636 and the other end being in contact with the pushing portion 621, to make the spring 636 be in a compressed state. The spring 636 provides buffering between the drive ring 631 and the pushing portion 621, thereby protecting the motor.

The hub assembly according to the embodiment of the present application further includes a mounting seat 640 mounted on the hub shaft 100. The electric shifting assembly 600 is mounted on the mounting seat 640.

Specifically, the mounting seat 640 is provided with an annular cavity 641, the drive ring 632 is nested in the annular cavity 641, and both the control motor 610 and the worm gear structure 633 are arranged in the annular cavity 641. This arrangement saves the axial space of the hub assembly so that the hub assembly has a reasonable width and the distance between fork ends of the bicycle frame is reduced.

The hub assembly according to the embodiment of the present application further includes a Hall plate 642 mounted on the mounting seat 640, a positioning magnet 643 arranged on the drive ring 631. When gear shifting is performed, the drive ring 631 rotates, and the positioning magnet 643 located on the drive ring 631 rotates accordingly. After the positioning magnet 643 rotates to be in place, the Hall plate 642 corresponds to the positioning magnet 643, thereby ensuring accurate gear shifting.

A bicycle is further provided according to an embodiment of the present application, which includes the hub assembly as described above.

The above description of the embodiments is provided to enable those skilled in the art to implement or use the present application. It is obvious for those skilled in the art to make many modifications to these embodiments. The general principles defined herein may be implemented in other embodiments without departing from spirit or scope of the present application. Therefore, the present application is not limited to the embodiments illustrated herein, but should be defined by the broadest scope consistent with the principle and novel features disclosed herein.

## Claims

1. A hub assembly comprising:
a hub shaft;
a hub rotatably sleeved on the hub shaft;
a planetary gear assembly arranged on the hub shaft and in the hub, wherein the planetary gear assembly is configured to transmit a driving force to the hub;
a power input member rotatably sleeved on the hub shaft and configured to provide the driving force to the planetary gear assembly;
a control assembly configured to act on the planetary gear assembly, to switch a transmission path of the driving force;
an electric shifting assembly configured to act on the control assembly, to switch the transmission path of the driving force; and
a driving motor arranged in the hub and configured to provide the driving force to the hub.

2. The hub assembly according to claim 1, wherein a mounting seat is provided in the hub, the mounting seat is provided with an annular cavity, and the electric shifting assembly is arranged in the annular cavity.

3. The hub assembly according to claim 1, wherein the control assembly comprises:
a seat mounted on the hub shaft;
a switching member arranged at the seat; and
a control sleeve configured to act on the switching member, to switch between an engaged state and a separated state of the switching member and a center wheel of the planetary gear assembly.

4. The hub assembly according to claim 3, wherein the electric shifting assembly comprises:
a control motor;
a control ring connected to the control sleeve, wherein the control ring has a pushing portion; and
a drive member driven by the control motor, wherein the drive member is configured to act on the pushing portion, to rotate the control ring around the hub shaft.

5. The hub assembly according to claim 4, wherein the drive member comprises:
a drive ring;
a toothed portion provided on an outer peripheral surface of the drive ring;
a worm gear structure driven by the control motor and meshing with the toothed portion; and
a pushing member provided on the drive ring and configured to act on the pushing portion.

6. The hub assembly according to claim 5, wherein the drive ring is provided with a mounting hole, a spring is provided in the mounting hole, and the pushing member is connected to the spring.

7. The hub assembly according to claim 5 or 6, wherein the drive ring is nested in the annular cavity, and the motor and the worm gear structure are arranged in the annular cavity.

8. The hub assembly according to claim 7, further comprising:
a Hall plate mounted on the mounting seat; and
a positioning magnet provided on the drive ring.

9. The hub assembly according to any one of claims 1 to 6 and 8, wherein
the power input member comprises a flywheel seat mounted on the hub shaft through a first bearing and a transmission gear mounted on the flywheel seat; and wherein
the flywheel seat is provided with a mounting cavity, and the hub is mounted in the mounting cavity through a second bearing.

10. A bicycle comprising the hub assembly according to any one of claims 1 to 9.
